## Europäisches Patentamt

## European Patent Office

## Office européen des brevets

(19)

(11) Veröffentlichungsnummer: **0 015 321**
A1

(12) # EUROPÄISCHE PATENTANMELDUNG

(21) Anmeldenummer: **79200122.4**

(22) Anmeldetag: **12.03.79**

(51) Int. Cl.³: **C 02 F 3/04,** B 01 D 23/04

(43) Veröffentlichungstag der Anmeldung: **17.09.80**
**Patentblatt 80/19**

(84) Benannte Vertragsstaaten: **BE CH FR GB IT LU NL SE**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Ott, Karl-Heinz, Fasanenstrasse 2, D-6233 Kelkheim (DE)**
Erfinder: **Disselbeck, Dieter, Am Rehsteig 3, D-6232 Bad Soden 2 (DE)**

(54) **Verfahren und Einrichtung zur Abwasserreinigung.**

(57) Verfahren und Anlage zur Reinigung von Abwasser, welches über eine Pumpe (1) und über eine Mischvorrichtung (2) – mit Flockungshilfsmitteln versetzt – einem Schwerkraftfilter (3) zugeführt wird, wobei sich ein Kombinationsfilter aus einem Stützgewebe und einer primären Filterschicht bildet. Das durch dieses Filter tretende Wasser reichert sich mit Sauerstoff bis nahe an den Sättigungspunkt an und wird sofort über ein, mit dem Schwerkraftfilter kombiniertes großflächiges Element (4) geleitet, in dem eine biologische Behandlung des Filtrats durchgeführt wird. Das biologisch gereinigte Wasser wird in einer Wanne (5) aufgefangen und über ein Absetzbecken, ein weiteres Filterteil, oder direkt einem Vorfluter zugeführt. Die im Filter (3) abgetrennten Wasserinhaltsstoffe werden als noch fließfähiger Schlamm über ein Ventil (6) abgezogen.

EP 0 015 321 A1

HOECHST AKTIENGESELLSCHAFT, 6230 Frankfurt am Main 80,
Zustellungsadresse: Hoechst Aktiengesellschaft, Werk
Albert, Postfach 12 9101, 6200 Wiesbaden 12

Hoe 76/A006B

P a t e n t a n m e l d u n g

## Verfahren und Einrichtung zur Abwasserreinigung

In der deutschen Patentanmeldung P 26 21 698.8 wird ein
Verfahren und eine Anlage zur Reinigung von Abwasser beschrieben. Hierbei wird Abwasser nach Zugabe von
Flockungshilfsmitteln gewebten Filterelementen zugeführt,
die in einem Gerüst hängend befestigt sind. Die ausgeflockten Schmutzstoffe bauen am Gewebe eine Filterschicht
auf. Diese Schicht bewirkt, daß neben den absetzbaren
Stoffen auch übrige, nämlich kolloide und zum Teil auch gelöste Wasserinhaltsstoffe durch Stofftransport- und Anlagerungsvorgänge, und zwar durch physikalische und zum
Teil auch chemische Vorgänge, weitgehend von der Flüssigkeit abgetrennt und zurückgehalten werden. Gleichzeitig
erfolgt durch die Schwerkraft eine Konzentrierung der abgetrennten Schmutzstoffe.

Grundlage des Verfahrens ist ein von den üblichen Filtriervorgängen abweichendes Prinzip. Hierbei erfolgt der Aufbau des Filters in vertikaler, der Filtratabfluß jedoch in
horizontaler Richtung und nicht wie üblich in vertikaler
Richtung.

Der Filtermechanismus bewirkt, daß sich selbsttätig laufend
neue Filterzonen bilden und somit eine Verstopfung auch bei
hohen Feststoffbelastungen nicht auftreten kann.

Mit dem Verfahren werden Reinigungsleistungen erzielt, die
den chemischen und den biochemischen Sauerstoffbedarf für
die weitere Reinigung des Filtrats um 50 - 80 %, evtl.
sogar bis 90 %, senken und den Phosphatanteil zu über 90%
entfernen. Das Filtrat wird danach vorzugsweise einer biologischen Behandlung unterworfen.

Gegenstand der Erfindung ist nun eine Weiterentwicklung des
vorgenannten Verfahrens, die dadurch gekennzeichnet ist,daß
man das durch die Filterwandung austretende Filtrat nicht
wie üblich in ein Sammelgefäß ablaufen läßt, sondern direkt
über ein mit dem Filter kombiniertes großflächiges Element
als biologisches Filter leitet und in diesem die biologische Behandlung durchführt. Zu diesem Zweck sind die Filter,
deren unterer Teil vorzugsweise konisch geformt ist, mit
ihrem unteren Teil in ein biologisches Filter eingeordnet.
Die erfindungsgemäße Abwasserreinigung erfolgt also in
einem Baukörper. Eine Anlage, die solche Baukörper aufweist, ist ebenfalls Gegenstand der Erfindung.

Durch die erfindungsgemäße Verfahrensweise wird der große
Vorteil erzielt, daß die biologische Aufarbeitung wesentlich
wirtschaftlicher durchgeführt werden kann. Es hat sich nämlich gezeigt, daß sich das Filtrat, das teils als dünner
Film an der Außenwand entlangläuft, teils aber auch in Form dünner Strahlen durch die Wandung austritt, bis nahe an den Sättigungspunkt mit Sauerstoff anreichert, weil es nach dem Austritt aus dem Filterelement eine ganze Zeit lang mit einer großen Oberfläche der Luft ausgesetzt ist. So wurde bei einer Wassertemperatur von 17°C ein Sauerstoffgehalt von 8 - 9 mg/l festgestellt, obwohl das dem Filter zugeführte Abwasser einen Gehalt von nur 1,5 - 2 mg/l aufwies. Diese durch die spezielle Art des Filtriervorganges bewirkte Sauerstoffanreicherung des Filtrats und seine feine Verteilung über einen großen Querschnitt werden also für eine sich sofort anschließende biologische Behandlung des Filtrats genutzt. Auf diese Weise ist es nicht mehr erforderlich, dem Filtrat, das gewöhnlich in einer konventionellen Kläranlage zu der meist räumlich von der Vorreinigungsstufe entfernten biologischen Stufe geleitet wird, erneut Sauerstoff zuzuführen. Damit wird ein im normalen Betrieb vorhandener Verfahrensschritt und damit auch ein zusätzlicher energetischer Aufwand vermieden. In dem aus dem Filter austretenden Wasser ist durch die erfindungsgemäße Anordnung genügend Sauerstoff gelöst, der sofort zur Bildung eines biologischen Rasens auf den Flächen des biologischen Filters führt, durch den die im Filtrat gelösten restlichen Schmutzstoffe abgebaut werden, wobei der dazu eventuell noch benötigte Sauerstoff der Luft entzogen wird.

Das Filter soll aus einem solchen Material hergestellt sein, daß es die durch das Füllgut erzeugten Kräfte aufnehmen kann. Im allgemeinen ist es sackförmig, vor allem zylindrisch geformt, mit einem Inhalt von mehr als 60 Litern, meistens 1 bis 5 $m^3$. Es kann im Prinzip aus jedem Material bestehen, das diese Aufgabe erfüllt, z.B. auch aus Maschendraht. Zweckmäßig verwendet man aber sacharttige Stützgewebe aus Filament- oder Fasergarngeweben aus Synthesefasern. Besonders vorteilhaft eignen sich solche aus Fäden aus Polyestern wie Polyäthylenterephthtalat, Polybutylenterephthalat, Poly-1,4-dimethylol-cyclohexanterephthalat bzw. analogen Produkten auf Basis von Isophthalsäure, Polyamiden wie Poly(hexamethylenadipinsäureamid), Polyhexamethylensebacinsäureamid, Polyundecansäureamid, Polycaprolactam, ferner aus Poly-p-phenylenterephthalamid, Geeignet sind auch Säche aus Fäden von Polyacrylnitril, aus Copolymeren von Acrylnitril und wenigstens einem weiteren Monomeren, deren Acrylnitrilgehalt wenigstens 85 % beträgt, aus Polyvinylchlorid oder aus Polyolefinen wie Polyäthylen oder Polypropylen.

Eine besonders vorteilhafte Ausführungsform des Verfahrens und des eingesetzten Filters besteht darin, daß das Filter als Schlauch mit einer Entleerungsvorrichtung ausgebildet ist, also z.B. am unteren Ende einen Verschluß hat.

Das Filtergewebe weist zweckmäßig eine nicht zu dicke Fadenstellung in Kette und Schuß auf, weil bei einer zu dichten Einstellung der Durchsatz stark absinken kann. Bei Polyäthylenterephthalatfäden mit einer Stärke von dtex. 2200 ist eine Gewebeeinstellung von 7,8 bis 9,2, vorzugsweise 8,2 bis 8,8 Fäden pro cm in Kett- und Schußrichtung bevorzugt. Bei einer anderen Fadenstärke ist die Fadenstellung entsprechend zu ändern. Bei Verwendung von Geweben aus anderen Stoffen lassen sich vom Fachmann die Einstellungen unter Berücksichtigung der Dehnungsverhältnisse dieser Gewebe ohne große Schwierigkeiten ermitteln.

0015321

Die biologischen Filter sind vorzugsweise als großflächige Elemente aus Kunststoff, z.B. Kunststoff-Tropfkörpern, kreisförmig , oval oder rechteckig direkt um die Gewebefilter angeordnet, d.h. in einem Baukörper mit dem Gewebefilter vereinigt. Sie können auch aus Schüttgut von Materialien mit großer Oberfläche,wie Lavasteinen, Kunststoffgranulat bestehen.

Ein Ausführungsbeispiel ist in der Schemaskizze dargestellt.

Das Abwasser wird über eine Pumpe (1) und eine Mischeinrichtung (2) nach Zugabe von Flockungshilfsmitteln, das sind z.B. Fällungsmittel wie Aluminiumchlorid, Aluminiumsulfat, Eisenchlorid, Kalziumhydroxyd; die vorteilhaft mit Flockungshilfsmitteln im engeren Sinn, wie Polyacrylat, lat- und/oder Polyacrylamid-Typen kombiniert werden, den Filterelementen (3) zugeführt.

Das von Feststoffen befreite und durch seine feine Verteilung mit Sauerstoff angereicherte Filtrat wird über das Tropfkörperelement (4) geleitet, in einer Wanne (5) aufgefangen und über ein Absetzbecken, ein weiteres Filterteil, oder direkt einem Vorfluter zugeführt.

Die im Filter abgetrennten Wasserinhaltsstoffe werden als noch fließfähiger Schlamm über ein Ventil (6) abgezogen.

Durch das Verfahren und die beschriebene Einrichtung wird es ermöglicht, auf besonders energie- und baukostensparende Weise bei wartungsarmem Betrieb Abwässer zu reinigen.

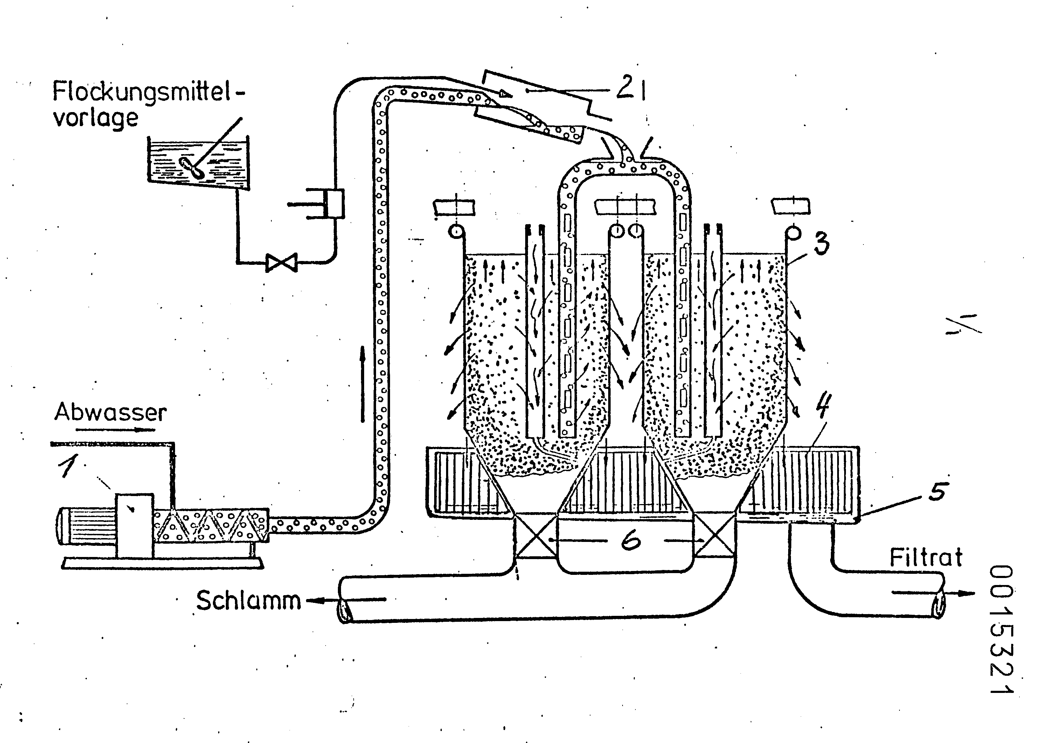

Patentansprüche

1. Verfahren zur Reinigung von Abwasser und zur Verminderung des biochemischen Sauerstoffbedarfs, der zur Reinigung von Abwasser erforderlich ist, wobei man das Abwasser mit Flockungshilfsmitteln versetzt und die Vorklärung mit der Abtrennung des größten Teils der kolloiddispersen Anteile in der Weise verbindet, daß man dieses mit den Flockungshilfsmitteln versetzte, feststoffhaltige Abwasser unter Einwirkung der Schwerkraft durch ein in einer Aufhängevorrichtung befindliches Stützgewebe leitet und dabei A) zuerst ein Kombinationsfilter aus a) einem Stutzgewebe und b) einer primären Filterschicht aus abgetrennten Feststoffen bildet und B) das weitere Abwasser durch dieses Kombinationsfilter vom größten Teil der Feststoffteilchen befreit und das schließlich erhaltene Filtrat anschließend biologisch reinigt, dadurch gekennzeichnet, daß man das durch die Filterwandung austretende Filtrat direkt über ein mit dem Filter kombiniertes großflächiges Element als biologisches Filter leitet und in diesem die biologische Behandlung durchgeführt.

2. Verfahren nach Anspruch 1, dadurch gekennzeichnet, daß man als Flockungshilfsmittel Fällungsmittel mit Polyacrylat und/oder Polyacrylamid kombiniert.

3. Anlage zur Reinigung von Abwasser, die als wesentliche Bestandteile eine Vorrichtung zur Flockung der im Abwasser enthaltenen Feststoffe, ein Schwerkraft-Kombinationsfilter aus einem Stützgewebe und einer Anschwemmfilterschicht, die aus den abgetrennten Feststoffen aufgebaut wird, eine Einrichtung zu biologischen Reinigung und eine Vorrichtung zum Abtrennen des bei der biologischen Behandlung anfallenden Schlamms enthält, dadurch gekennzeichnet, daß Schwerkraft_filter und biologisches Filter in einem Baukörper vereinigt sind.

4. Ausführungsform nach einem oder mehreren der Ansprüche 1 bis 3, dadurch gekennzeichnet, daß das Filter sackförmig, insbesondere zylindrisch geformt ist und einen Inhalt von mehr als 60 Litern, insbesondere 1 bis 5 $m^3$ hat.

5. Ausführungsform nach Anspruch 4, dadurch gekennzeichnet, daß das Filter die Form eines Schlauches und eine Entleerungsvorrichtung besitzt.

6. Ausführungsform nach einem oder mehreren der Ansprüche 1 bis 5, dadurch gekennzeichnet, daß das Filtermaterial synthetische Filament- oder Fasergewebe sind, die insbesondere aus Fäden aus Polyestern, vorzugsweise Polyäthylenterephthalat bestehen.

7. Ausführungsform nach Anspruch 6, dadurch gekennzeichnet, daß die Polyäthylenterephthalat_fäden eine Stärke von dtex 2200 haben und die Gewebe eine Einstellung von 7,8 bis 9,2, vorzugsweise 8,2 bis 8,8 Fäden pro cm in Kett- und Schußrichtung aufweisen.

8. Ausführungsform nach einem oder mehreren der Ansprüche 1 bis 8, dadurch gekennzeichnet, daß die biologischen Filter großflächige Elemente aus Kunststoff sind.

Dr. K/Ka
8.3.1979

| Kategorie | EINSCHLÄGIGE DOKUMENTE | | KLASSIFIKATION DER ANMELDUNG (Int.Cl. 3) |
|---|---|---|---|
| | Kennzeichnung des Dokuments mit Angabe, soweit erforderlich, der maßgeblichen Teile | betrifft Anspruch | |
| E | EP - A - 0 002 858 HOECHST) <br> * Seite 4, Zeile 3 - Seite 5, Zeile 26; Seite 8, Zeile 17 - Seite 9 * <br><br> -- | 1-4,6-8 | C 02 F 3/04 <br> B 01 D 23/04 |
| A | DE - A - 2 621 698 (HOECHST) | | |
| A | DE - A - 2 638 910 (HOECHST) | | |
| A | DE - A - 2 331 128 (W. KRÁUSE) | | |
| A | DE - A - 2 315 615 (K. DIETZEL) <br><br> ---- | | **RECHERCHIERTE SACHGEBIETE (Int. Cl. 3)** <br><br> C 02 F 3/04 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-11-1979 | TEPLY |